# EUROPÄISCHE PATENTSCHRIFT

(11) **EP 0 865 975 B1**
(45) Veröffentlichungstag und Bekanntmachung des Hinweises auf die Patenterteilung: **16.04.2003**
(21) Anmeldenummer: 98102012.6
(22) Anmeldetag: 05.02.1998
(51) Int. Cl.: B60R 22/41

(54) **Gurtaufroller für einen Fahrzeug-Sicherheitsgurt**
Retractor for motor vehicle seat belt
Rétracteur pour ceinture de sécurité de véhicule automobile

(30) Priorität: 18.03.1997 DE 29704974 U
(43) Veröffentlichungstag der Anmeldung: 23.09.1998
(73) Patentinhaber: TRW Occupant Restraint Systems GmbH & Co. KG, 73551 Alfdorf (DE)
(72) Erfinder: Weller, Hermann-Karl, 73553 Alfdorf (DE)
(74) Vertreter: Kitzhofer, Thomas, Dipl.-Ing.

(56) Entgegenhaltungen:
- EP-A- 0 638 467

## Beschreibung

Die Erfindung betrifft einen Gurtaufroller für einen Fahrzeug-Sicherheitsgurt, mit einem Rahmen, in dem drehbar eine Gurtspule gelagert ist, die mit einer Blockierverzahnung versehen ist, sowie einer mit wenigstens einem Blockierzahn versehenen Blockierklinke, die in die Blockierverzahnung bewegt werden kann, um die Gurtspule gegen eine Drehung in der Abwickelrichtung des Sicherheitsgurtes zu blockieren, einem relativ zur Gurtspule verdrehbaren Steuerring, der mit einer Kupplungsverzahnung versehen ist und an der Blockierklinke angreift, einer an der Gurtspule drehbar gelagerten Kupplungsklinke, und einer Steuerscheibe, die mit der Gurtspule drehfest ist und an der drehbar eine Massescheibe angebracht ist, die bei Relativdrehung zur Steuerscheibe die Kupplungsklinke mit der Kupplungsverzahnung des Steuerrings in Eingriff bringt, wodurch bei Drehung der Gurtspule in der Abwickelrichtung der Steuerring über die Kupplungsklinke mitgenommen und die Blockierklinke durch eine Verbindung zwischen dem Steuerring und der Blockierklinke bis zu einem ersten Kontakt zwischen dem Blockierzahn und der Blockierverzahnung in diese eingesteuert wird, wobei ab diesem ersten Kontakt von der Blockierverzahnung auf die Blockierklinke ein solches Drehmoment ausgeübt wird, daß die Blockierklinke vollständig in die Blockierverzahnung verschwenkt wird.

Ein gattungsgemäßer Gurtaufroller ist aus der europäischen Patentanmeldung 0 638 467 bekannt. Er dient dazu, einem Insassen eines Fahrzeugs einen Fahrzeug-Sicherheitsgurt zur Verfügung zu stellen, wobei der Sicherheitsgurt im Normalzustand frei gegen die Kraft einer Rückholfeder von der Gurtspule abwickelbar ist, während im blockierten Zustand ein Gurtbandabzug nicht möglich ist. Die Blockierung kann entweder gurtbandsensitiv, also in Abhängigkeit von auf das Gurtband einwirkenden Beschleunigungen, oder fahrzeugsensitiv erfolgen, also in Abhängigkeit von auf das Fahrzeug einwirkenden Beschleunigungen.

Bei solchen Gurtaufrollern kann es jedoch zu einer unerwünschten Blockierung der Gurtspule kommen. Dies kann dann auftreten, wenn das Gurtband beim Abwickeln von der Gurtspule oder beim Aufwickeln auf diese plötzlich abgebremst oder beschleunigt wird, beispielsweise durch Anschlagen einer sich am Gurtband befindenden Steckzunge an einer Führung des Sicherheitsgurtes oder einem Umlenkbeschlag, bei einer Änderung der Einstellung eines höhenverstellbaren Umlenkbeschlags oder am Ende der Aufwickelbewegung, wenn das Gurtband straffgezogen ist. In solchen Situationen kann es vorkommen, daß die Blockierung des Gurtaufrollers gurtbandsensitiv ausgelöst wird. Der Gurtaufroller gelangt dann in einen Zustand, in welchem der gurtbandsensitive Blockiermechanismus ausgelöst ist, während gleichzeitig das Gurtband die Gurtspule in der Abwickelrichtung beaufschlagt. Dieser Zustand läßt sich nur mit erhöhtem Aufwand beseitigen, beispielsweise durch kräftiges Ziehen am Gurtband, so daß eine Gurtbandlose entsteht, und anschließendes Freigeben des Gurtbandes, so daß sich die Gurtspule unter der Kraft der Rückholfeder in der Aufwickelrichtung drehen kann, wodurch der Blockiermechanismus freigegeben wird und in seine Ruhestellung zurückkehren kann. Diese Situation wird noch verschärft, wenn gleichzeitig mit der gurtbandsensitiven Aktivierung des Blockiermechanismus auch die fahrzeugsensitive Blockierung des Gurtaufrollers eingeleitet wird, beispielsweise durch Erschütterungen des Fahrzeugs oder durch Einrasten einer umklappbaren, mit einem Gurtaufroller versehenen Rücksitzlehne in ihrem Verriegelungsmechanismus. In diesem Fall kann der Gurtaufroller in einen Zustand gelangen, in welchem sowohl der gurtbandsensitive als auch der fahrzeugsensitive Blockiermechanismus des Gurtaufrollers im aktivierten Zustand verspannt ist.

Die Erfindung schafft einen Gurtaufroller, bei welchem nach Einleiten der Blockierung der Gurtspule der die Blockierung auslösende, gurtbandsensitiv oder fahrzeugsensitiv ansprechende Sperrmechanismus zuverlässig freigegeben wird. Gemäß der Erfindung ist bei einem Gurtaufroller der eingangs genannten Art vorgesehen, daß die Blockierklinke und der Steuerring auch mittels einer Kulissenführung miteinander gekoppelt sind, die nach dem ersten Kontakt zwischen dem Blockierzahn und der Blockierverzahnung die Schwenkbewegung der Blockierklinke in die Blockierverzahnung hinein in eine Drehung des Steuerrings umsetzt, die der Drehung der Gurtspule in der Abwickelrichtung voreilt. Durch die von der Kulissenführung hervorgerufene Voreilung des Steuerrings relativ zur Gurtspule löst sich die Kupplungsverzahnung des Steuerrings von der Kupplungsklinke, wodurch diese wieder in ihre Ruhestellung zurückkehren kann. Daher ist der Sperrmechanismus des Gurtaufrollers, der im wesentlichen gebildet wird von der Kupplungsklinke, der dieser zugeordneten Kupplungsverzahnung des Steuerrings und der Steuerscheibe, wieder in seinen Ruhezustand zurückgesetzt. Daher ist eine geringfügige Drehung der Gurtspule in der Aufwickelrichtung ausreichend, um die Blockierklinke aus der Blockierverzahnung der Gurtspule herauszubewegen, so daß die Gurtspule wieder frei drehbar ist. Die Erfindung macht sich also die folgende Erkenntnis zunutze: Nach gurtbandsensitiver oder fahrzeugsensitiver Auslösung des Sperrmechanismus des Gurtaufrollers muß die Gurtspule noch eine Drehung um einen vorbestimmten Winkel in der Abwickelrichtung durchführen, bis die Gurtspule vollständig blockiert ist. Dieser Drehwinkel setzt sich zusammen aus einem Vorsteuer-Drehwinkel, der mit der Aktivierung des Sperrmechanismus beginnt und bis zum Beginn des Verschwenkens der Blockierklinke dauert, und einem Einsteuer-Drehwinkel, während dem die Blockierklinke in die Blockierverzahnung der Gurtspule eingesteuert wird. Wenn sich ein herkömmlicher Gurtaufroller im Zustand mit blockierter Gurtspulc befindet, muß die Gurtspule sowohl um den Einsteuer-Drehwinkel als auch den Vorsteuer-Drehwinkel in der Aufwickelrichtung gedreht werden, damit der Sperrmechanismus und damit auch wieder die Gurtspule wieder freigegeben wird. Bei einem erfindungsgemäßen Gurtaufroller muß dagegen die Gurtspule lediglich um den Einsteuer-Drehwinkel in der Aufwickelrichtung gedreht werden, damit die Gurtspule wieder frei drehbar ist, da der Sperrmechanismus bereits während des Verschwenkens der Blockierklinke in die Blockierverzahnung hinein wieder entspannt wird.

Gemäß einer bevorzugten Ausführungsform der Erfindung ist vorgesehen, daß die Kulissenführung aus einem an der Blockierklinke vorgesehenen Stift und einer an dem Steuerring vorgesehenen Kulisse besteht. Bei dieser Gestaltung ergibt sich eine besonders vorteilhafte Raumausnutzung, da am Steuerring mehr Platz für die Kulisse zur Verfügung steht als an der Blockierklinke.

Gemäß einer möglichen Ausführungsform der Erfindung ist vorgesehen, daß die Blockierklinke mit einer Führungsnut versehen ist, in die ein am Steuerring vorgesehener Zapfen eingreift, so daß die Blockierklinke mittels des Steuerrings in die Blockierverzahnung der Gurtspule bis zu einem ersten Kontakt zwischen dem Blockierzahn der Blockierklinke und der Blockierverzahnung in diese eingesteuert werden kann. Bei dieser Ausführungsform wird die Kulissenführung lediglich dazu verwendet, die Voreilung des Steuerrings gegenüber der Gurtspule beim Blockieren der Gurtspule zu erzielen; das Einsteuern der Blockierklinke in die Blockierverzahnung wird mittels der Führungsnut und des Zapfens erzielt. Diese Ausführungsform ist insbesondere deshalb vorteilhaft, weil die Führungsnut und der Zapfen bereits bei herkömmlichen Gurtaufrollern vorgesehen sind; die notwendigen Modifikationen beschränken sich daher auf ein Mindestmaß.

Gemäß einer anderen möglichen Ausführungsform der Erfindung ist vorgesehen, daß der Stift am vorderen, vom Drehpunkt der Blockierklinke entfernten Ende der Blockierklinke angeordnet ist. Bei dieser Ausführungsform kann auf die Führungsnut und den Zapfen verzichtet werden, mit denen die Blockierklinke in die Blockierverzahnung eingesteuert wird. Die Kulissenführung erfüllt somit beide Aufgaben, nämlich das Einsteuern der Blockierklinke in die Blockierverzahnung und das Herbeiführen der Voreilung des Steuerrings gegenüber der Gurtspule. Da die Kulisse aufgrund der Anordnung des Stifts an der Blockierklinke deren Schwenkbewegung mit einem großen Hebelarm hervorruft, ergibt sich eine besonders präzise Bewegung der Blockierklinke.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In den Zeichnungen zeigen:
- Figur 1 eine schematische Seitenansicht eines erfindungsgemäßen Gurtaufrollers mit dessen Sperrmechanismus in einem ersten Zustand;
- Figur 2 den Gurtaufroller von Figur 1 mit dem Sperrmechanismus in einem zweiten Zustand; und
- Figur 3 eine schematische Draufsicht auf einen Steuerring, der bei dem erfindungsgemäßen Gurtaufroller gemäß den Figuren 1 und 2 verwendet wird.

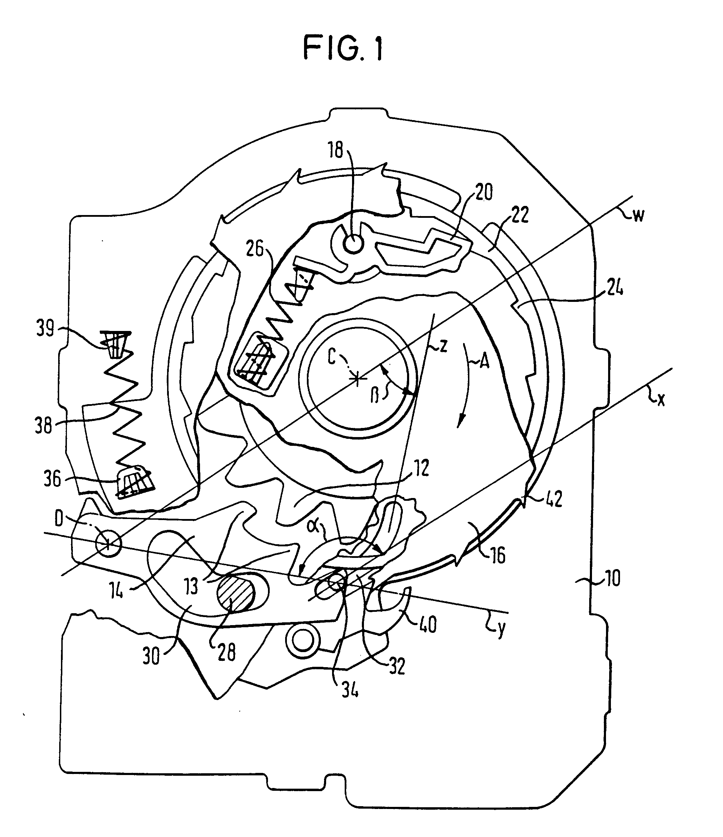

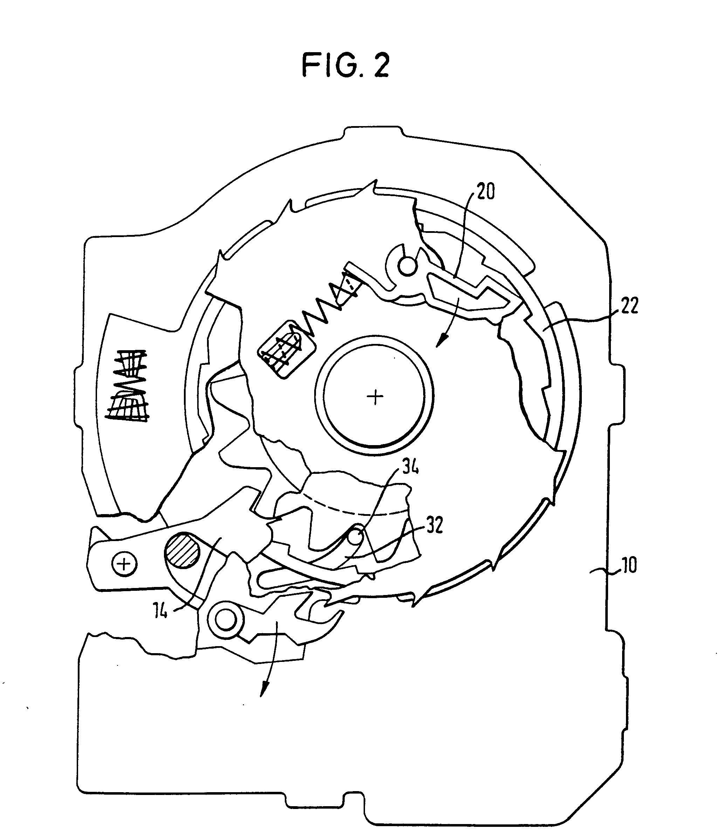

In den Figuren 1 und 2 ist in einer schematischen Seitenansicht ein erfindungsgemäßer Gurtaufroller dargestellt. Dieser besteht im wesentlichen aus einem Rahmen 10, in welchem eine (nicht dargestellte) Gurtspule mit einer Drehachse C drehbar gelagert ist. Die Drehachse C steht senkrecht zur Betrachtungsebene. Die Gurtspule ist an jedem axialen Ende mit einer Blockierverzahnung 12 versehen, in die eine mit Blockierzähnen 13 versehene Blockierklinke 14 eingreifen kann, um die Gurtspule gegen eine Drehung in der Abwickelrichtung des Sicherheitsgurtes zu blockieren.

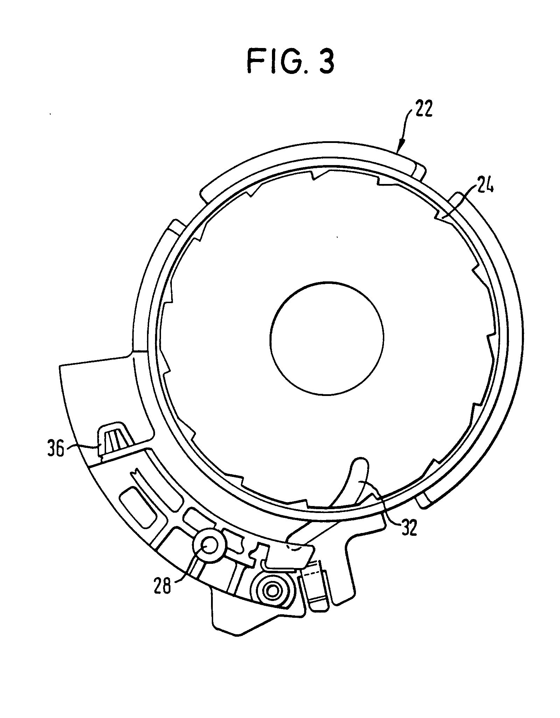

Die Blockierklinke 14 kann in die Blockierverzahnung 12 mittels eines Sperrmechanismus verschwenkt werden, der im wesentlichen aus den folgenden Bestandteilen besteht: Einer Steuerscheibe 16, einem Halteteil 18, einer Kupplungsklinke 20 und einem Steuerring 22. Die Steuerscheibe 16 ist koaxial mit der Gurtspule und drehfest an dieser angebracht. An der Steuerscheibe 16 ist eine (in der Zeichnung nicht dargestellte) Massescheibe um einen vorbestimmten Drehwinkel verdrehbar angebracht. Das Halteteil 18 ist drehfest mit der Gurtspule verbunden. Auf dem Halteteil ist verschwenkbar die Kupplungsklinke 20 gelagert, die in eine Kupplungsverzahnung 24 des Steuerrings 22 eingesteuert werden kann. Die Kupplungsklinke 20 wird von einer Feder 26 in ihre Ruhestellung beaufschlagt, in der sie nicht in die Kupplungsverzahnung 24 eingreift. Die Massescheibe greift an der Kupplungsklinke 20 derart an, daß bei einer Drehung der Massescheibe relativ zur Steuerscheibe 16 und somit relativ zum Halteteil 18 die Kupplungsklinke 20 mit der Kupplungsverzahnung 24 des Steuerrings 22 in Eingriff gebracht wird. Der Steuerring 22 ist am Rahmen 10 koaxial zur Gurtspule drehbar angebracht. Der Steuerring 22 (siehe auch Figur 3) ist mit einem Zapfen 28 versehen, der in eine Führungsnut 30 der Blockierklinke 14 eingreift. Die Führungsnut 30 weist einen ersten Abschnitt auf, dessen Breite etwa dem Durchmesser des Zapfens 28 entspricht, und einen zweiten Abschnitt, dessen Breite größer als der Durchmesser des Zapfens 28 ist.

Der Steuerring 22 ist außerdem mit einer Kulisse 32 versehen, in die ein Stift 34 eingreift, der am vorderen Ende der Blockierklinke 14 angebracht ist, das vom Drehpunkt D der Blockierklinke entfernt ist. Die Kulisse 32 besteht aus einem ersten Abschnitt, der im wesentlichen geradlinig ist, und einem zweiten Abschnitt, der gekrümmt ist. Die Erstreckungsrichtung des ersten Abschnittes, die in Figur 1 mit dem Bezugszeichen x angedeutet ist, schließt mit einer durch die Drehachse D und den Stift 34 verlaufenden Ebene, die in Figur 1 mit y angedeutet ist, einen Winkel α ein, der zwischen etwa 130° und etwa 150° beträgt. Vorzugsweise beträgt der Winkel α etwa 140°. Eine in Figur 1 mit z bezeichnete Tangente an das vom ersten Abschnitt abgewandte Ende des zweiten Abschnittes der Kulisse 32 schließt mit einer durch die Drehachse C der Gurtspule und die Drehachse D der Blockierklinke 14 verlaufenden Ebene einen Winkel β ein, der zwischen etwa 30° und etwa 60° beträgt. Vorzugsweise beträgt der Winkel β etwa 45°. Der erste Abschnitt der Kulisse 32 ist in der Ruhestellung des Steuerrings 22 annähernd parallel zu einer in der Figur mit w angedeuteten Ebene ausgerichtet, die durch die Drehachse C der Gurtspule und die Drehachse D der Blockierklinke 14 verläuft. Der zweite Abschnitt der Kulisse 32 ist gegenüber der Richtung, in der sich der erste Abschnitt der Kulisse erstreckt, zur Drehachse C der Gurtspule hin gekrümmt. Die Krümmung des zweiten Abschnittes steigt ausgehend vom Übergang zum ersten Abschnitt an. Der Steuerring 22 ist auch mit einem Widerlager 36 versehen, an der sich ein Ende einer Rückstellfeder 38 abstützt, deren anderes Ende sich an einem rahmenfesten Anschlag 39 abstützt.

Die Funktionsweise des erfindungsgemäßen Gurtaufrollers ist die folgende: In der Ruhestellung des Sperrmechanismus, in welcher die Kupplungsklinke 20 gegenüber der in Figur 1 dargestellten Stellung im Uhrzeigersinn verschwenkt ist, so daß sie nicht in die Kupplungsverzahnung 24 des Steuerrings 22 eingreift, kann sich die Gurtspule frei im Rahmen 10 drehen. Aus diesem Zustand heraus kann gurtbandsensitiv oder fahrzeugsensitiv eine Blockierung der Gurtspule eingeleitet werden. Diese beginnt mit einer Drehung der Steuerscheibe 16 relativ zur Gurtspule. Diese Drehung kann hervorgerufen werden durch eine Steuerklinke 40, die von einem bekannten (nicht dargestellten) fahrzeugsensitiven Sensor in am Außenumfang der Steuerscheibe 16 vorgesehene Zähne 42 eingreift, so daß bei einer Drehung der Gurtspule die Steuerscheibe hinter dieser Drehung zurückbleibt, oder durch die Massenträgheit der Massescheibe, aufgrund derer sie bei einer Drehbeschleunigung der Gurtspule hinter deren Drehung zurückbleibt. Aufgrund dieser Relativdrehung wird die Kupplungsklinke 20 mit der Kupplungsverzahnung 24 des Steuerrings 22 in Eingriff gebracht. Somit ist der Steuerring 24 über die Kupplungsklinke 20 und das Halteteil 18 drehfest für Drehungen in der Richtung A verbunden.

Wenn nun die Gurtspule in der Abwickelrichtung, also in der Richtung A, gedreht wird, steuert der Zapfen 28 die Blockierklinke 14 über die Führungsnut 30 in die Blockierverzahnung 12 der Gurtspule ein, bis es zu einem ersten Kontakt zwischen den Zähnen der Blockierklinke 14 und der Blockierverzahnung 12 kommt. Ab diesem ersten Kontakt übt die Blockierverzahnung 12 auf die Blockierklinke 14 ein solches Drehmoment aus, daß die Blockierklinke 14 vollständig in die Blockierverzahnung 12 hineinverschwenkt wird. Dabei gelangt der Zapfen 28 des Steuerrings 22 vom ersten Abschnitt der Führungsnut 30 in den zweiten Abschnitt, der eine größere Breite hat; auf diese Weise kommt der Zapfen 28 von der Führungsnut 30 frei, so daß die Blockierklinke 14 ungehindert von dem Zapfen 28 verschwenkt werden kann. Zu diesem Zeitpunkt befindet sich der Stift 34 am Übergang zwischen dem ersten Abschnitt und dem zweiten Abschnitt der Kulisse 32. Bei fortgesetzter Drehung der Gurtspule und somit weiterem Einschwenken der Blockierklinke 14 in die Blockierverzahnung 12 greift der Stift 34 an der Innenseite des gekrümmten zweiten Abschnittes der Kulisse 32 an und dreht den Steuerring in Richtung des Pfeils A. Aufgrund der speziellen Ausrichtung der Kulisse 32 relativ zur Drehachse C, der Drehachse D und der Ebene y erteilt der Stift 34 dem Steuerring 22 mittels des zweiten Abschnittes der Kulisse 32 eine Drehung, die schneller als die Drehung der Gurtspule ist; der Steuerring 22 eilt also der Gurtspule voraus, da er nun über die Blockierklinke 14 und die aus der Kulisse 32 und dem Stift 34 bestehende Kulissenführung und nicht mehr über das Halteteil 18 und die Kupplungsklinke 20 angetrieben wird. Da der Steuerring 22 nunmehr der Gurtspule und somit auch dem drehfest mit dieser verbundenen Halteteil 18 voreilt, kommt die Kupplungsklinke 20 von der Kupplungsverzahnung 24 des Steuerrings 22 frei, so daß sie unter der Wirkung der Feder 26 in ihre Ruhestellung zurückkehren kann; der Sperrmechanismus ist also von der Gurtspule getrennt. Auch die möglicherweise an der Steuerscheibe 16 angreifende Steuerklinke 40 kann sich nun von der Steuerscheibe lösen. Der Sperrmechanismus befindet sich daher, obwohl die Gurtspule zuverlässig gegen Drehungen in der Abwickelrichtung blockiert ist, in ihrem unaktivierten Ruhezustand. Somit genügt bereits eine geringfügige Drehung der Gurtspule in der Aufwickelrichtung, also entgegen dem Pfeil A, um die Blockierklinke 14 von der Blockierverzahnung 12 zu lösen. Selbst wenn sich also der Gurtaufroller in einem verspannten Zustand befinden sollte, in welchem das Gurtband gespannt ist und die Gurtspule blockiert ist, genügt eine geringfügige Drehung der Gurtspule in der Aufwickelrichtung, um die Blockierklinke von der Blockierverzahnung der Gurtspule zu lösen.

Gemäß einer nicht dargestellten Weiterbildung der Erfindung ist vorgesehen, daß die Blockierklinke 14 ausschließlich mittels der aus der Kulisse 32 und dem Stift 34 bestehenden Kulissenführung in die Blockierverzahnung 12 eingesteuert wird; es kann also auf den Zapfen 28 am Steuerring 22 und die Führungsnut 30 in der Blockierklinke 14 verzichtet werden. Da der Stift 34 am von der Drehachse D entfernten Ende der Blockierklinke 14 angebracht ist, erfolgt die Verstellung der Blockierklinke 14 mit großer Genauigkeit.

Gemäß einer ebenfalls nicht dargestellten Weiterbildung der Erfindung ist vorgesehen, daß die Kulisse 32 verschiebbar am Steuerring 22 angebracht ist. Es ist auch möglich, daß die Kulisse verformbar ist. Dies empfiehlt sich insbesondere dann, wenn dem Gurtaufroller ein Gurtstraffer zugeordnet ist, mit dem im Bedarfsfall die sogenannte Gurtlose aus dem Sicherheitsgurt beseitigt werden kann. Wenn die Gurtspule zu diesem Zweck in der Aufwickelrichtung gedreht wird, wird die Blockierklinke 14 aus der Blockierverzahnung 12 herausgedrückt. Dies wird ohne Zerstörung des Sperrmechanismus dadurch gewährleistet, daß die Kulisse 32 verschiebbar am Steuerring 22 angebracht ist.

Vorteilhaft bei dem erfindungsgemäßen Gurtaufroller ist auch, daß sich die Längsrichtung der Kulisse annähernd in der Richtung des Gurtbandabzugs von der Gurtspule erstreckt. Auf diese Weise wird verhindert, daß beim Blockieren der Gurtspule, wenn sich die Gurtspule unter hoher Last am Rahmen 10 abstützt, zusätzliche mechanische Belastungen auf die Bestandteile des Sperrmechanismus einwirken, die üblicherweise aus Kunststoff bestehen.

## Patentansprüche

1. Gurtaufroller für einen Fahrzeug-Sicherheitsgurt, mit einem Rahmen (10), in dem drehbar eine Gurtspule gelagert ist, die mit einer Blockierverzahnung (12) versehen ist, sowie einer mit wenigstens einem Blockierzahn (13) versehenen Blockierklinke (14), die in die Blockierverzahnung (12) bewegt werden kann, um die Gurtspule gegen eine Drehung in der Abwickelrichtung des Sicherheitsgurtes zu blockieren, einem relativ zur Gurtspule verdrehbaren Steuerring (22), der mit einer Kupplungsverzahnung (24) verschen ist und an der Blockierklinke (14) angreift, einer an der Gurtspule drehbar gelagerten Kupplungsklinke (20), und einer Steuerscheibe (16), die mit der Gurtspule drehfest ist und an der drehbar eine Massescheibe angebracht ist, die bei Relativdrehung zur Steuerscheibe (16) die Kupplungsklinke (20) mit der Kupplungsverzahnung (24) des Steuerrings (22) in Eingriff bringt, wodurch bei Drehung der Gurtspule in der Abwickelrichtung der Steuerring (22) über die Kupplungsklinke (20) mitgenommen und die Blockierklinke (14) durch eine Verbindung zwischen dem Steuerring (22) und der Blockierklinke (14) bis zu einem ersten Kontakt zwischen dem Blockierzahn (13) und der Blockierverzahnung (12) in diese eingesteuert wird, wobei ab diesem ersten Kontakt von der Blockierverzahnung (12) auf die Blockierklinke (14) ein solches Drehmoment ausgeübt wird, daß die Blockierklinke (14) vollständig in die Blockierverzahnung verschwenkt wird,
**dadurch gekennzeichnet, daß** die Blockierklinke (14) und der Steuerring (22) auch mittels einer Kulissenführung (32, 34) miteinander gekoppelt sind, die nach dem ersten Kontakt zwischen dem Blockierzahn (13) und der Blockierverzahnung (12) die Schwenkbewegung der Blockierklinke (14) in die Blockierverzahnung (12) hinein in eine Drehung des Steuerrings (22) umsetzt, die der Drehung der Gurtspule in der Abwickelrichtung voreilt.

2. Gurtaufroller nach Anspruch 1, **dadurch gekennzeichnet, daß** die Kulissenführung aus einem an der Blockierklinke (14) vorgesehenen Stift (34) und einer an dem Steuerring (22) vorgesehenen Kulisse (32) besteht.

3. Gurtaufroller nach einem der Ansprüche 1 und 2, **dadurch gekennzeichnet, daß** die Blockierklinke (14) mit einer Führungsnut (30) versehen ist, in die ein am Steuerring (22) vorgesehener Zapfen (28) eingreift, so daß die Blockierklinke (14) mittels des Steuerrings (22) in die Blockierverzahnung (12) der Gurtspule bis zu dem ersten Kontakt zwischen dem Blockierzahn (13) der Blockierklinke (14) und der Blockierverzahnung (12) in diese eingesteuert werden kann.

4. Gurtaufroller nach Anspruch 3, **dadurch gekennzeichnet, daß** nach dem ersten Kontakt zwischen dem Blockierzahn (13) der Blockierklinke (14) und der Blockierverzahnung (12) der Gurtspule die Führungsnut (30) von dem Zapfen (28) freikommt.

5. Gurtaufroller nach Anspruch 4, **dadurch gekennzeichnet, daß** die Führungsnut (30) wenigstens teilweise eine Breite hat, die größer als der Durchmesser des Zapfens (28) ist.

6. Gurtaufroller nach einem der Ansprüche 2 bis 5, **dadurch gekennzeichnet, daß** der Stift (34) am vorderen, von der Drehachse (D) der Blockierklinke (14) entfernten Ende der Blockierklinke (14) angeordnet ist.

7. Gurtaufroller nach einem der Ansprüche 2 bis 6, **dadurch gekennzeichnet, daß** die Kulisse (32) verformbar ist oder elastisch verschiebbar an dem Steuerring (22) angebracht ist.

8. Gurtaufroller nach einem der Ansprüche 2 bis 7, **dadurch gekennzeichnet, daß** der Steuerring (22) konzentrisch zur Drehachse (C) der Gurtspule drehbar ist und daß ein erster Abschnitt der Kulisse (32), der bei einer Drehung des Steuerrings (22) die Blockierklinke (14) bis zum ersten Kontakt mit der Blockierverzahnung (12) in diese einsteuert, in der Ruhestellung des Steuerrings (22) annähernd parallel zu einer Ebene (w) ausgerichtet ist, die durch die Drehachse (C) der Gurtspule und die Drehachse (D) der Blockierklinke (14) verläuft.

9. Gurtaufroller nach Anspruch 8, **dadurch gekennzeichnet, daß** die Erstreckungsrichtung (x) des ersten Abschnitts der Kulisse (32) und eine durch den Drehpunkt (D) der Blockierklinke (14) und den Stift (34) verlaufende Ebene (y) einen Winkel (α) zwischen etwa 130° und etwa 150° einschließen.

10. Gurtaufroller nach Anspruch 9, **dadurch gekennzeichnet, daß** der Winkel (α), den die Erstreckungsrichtung (x) des ersten Abschnitts und die durch den Drehpunkt (D) der Blockierklinke (14) und den Stift (34) verlaufende Ebene (y) einschließen, etwa 140° beträgt.

11. Gurtaufroller nach einem der Ansprüche 8 bis 10, **dadurch gekennzeichnet, daß** ein zweiter Abschnitt der Kulisse (32), der die auf die Einsteuerbewegung der Blockierklinke (14) folgende Schwenkbewegung in eine Drehung des Steuerrings (22) umsetzt, gegenüber der Richtung, in der sich der erste Abschnitt erstreckt, zur Drehachse (C) der Gurtspule hin gekrümmt ist.

12. Gurtaufroller nach Anspruch 11, **dadurch gekennzeichnet, daß** die Krümmung des zweiten Abschnitts ausgehend vom Übergang zum ersten Abschnitt ansteigt.

13. Gurtaufroller nach einem der Ansprüche 11 und 12, **dadurch gekennzeichnet, daß** eine Tangente (z) an das vom ersten Abschnitt abgewandte Ende des zweiten Abschnittes der Kulisse (32) mit einer durch die Drehachse (C) der Gurtspule und die Drehachse (D) der Blockierklinke (14) verlaufenden Ebene (w) einen Winkel (β) zwischen etwa 30° und etwa 60° einschließt.

14. Gurtaufroller nach Anspruch 13, **dadurch gekennzeichnet, daß** der Winkel (β), den die Tangente (z) an das vom ersten Abschnitt abgewandte Ende des zweiten Abschnittes der Kulisse (32) mit der durch die Drehachse (C) der Gurtspule und die Drehachse (D) der Blockierklinke (14) verlaufenden Ebene (w) einschließt, etwa 45° beträgt.

15. Gurtaufroller nach einem der vorhergehenden Ansprüche, **dadurch gekennzeichnet, daß** der Stift (34) einstückig mit der Blockierklinke (14) ausgebildet ist.

16. Gurtaufroller nach einem der Ansprüche 2 bis 15, **dadurch gekennzeichnet, daß** die Längsrichtung der Kulisse (32) sich annähernd in der Richtung des Gurtbandabzugs von der Gurtspule erstreckt.

## Claims

1. A belt retractor for a vehicle safety belt, with a frame (10), in which a belt spool is rotatably mounted, which is provided with a locking toothing (12), and also with a locking catch (14) which is provided with at least one locking tooth (13) and can be moved into the locking toothing (12) in order to lock the belt spool against a rotation in the unwinding direction of the safety belt, with a control ring (22), rotatable relative to the belt spool, which ring (22) is provided with a coupling toothing (24) and engages the locking catch (14), with a coupling catch (20) rotatably mounted on the belt spool, and with a control disc (16) which is non-rotatable in relation to the belt spool and has an inertial disk rotatably mounted thereon which on rotation relative to the control disk (16) brings the coupling catch (20) into engagement with the coupling toothing (24) of the control ring (22), whereby on rotation of the belt spool in the unwinding direction, the control ring (22) is entrained via the coupling catch (20) and the locking catch (14) is engaged into the locking toothing (12) up to a first contact between the locking tooth (13) and the locking toothing (12) by a connection between the control ring (22) and the locking catch (14), such a torque being exerted by the locking toothing (12) on the locking catch (14) as from this first contact that the locking catch (14) is swivelled completely into the locking toothing,
**characterised in that** the locking catch (14) and the control ring (22) are coupled with each other also via a slot link (32, 34), which after the first contact between the locking tooth (13) and the locking toothing (12) converts the swivelling movement of the locking catch (14) towards the locking toothing (12) into a rotation of the control ring (22), which leads the rotation of the belt spool in the unwinding direction.

2. The belt retractor according to Claim 1, **characterised in that** the slot link consists of a pin (34) provided on the locking catch (14) and of a slot (32) provided on the control ring (22).

3. The belt retractor according to any one of Claims 1 and 2, **characterised in that** the locking catch (14) is provided with a guide groove (30), into which a pin (28) provided on the control ring (22) engages so that the locking catch (14) can be engaged into the locking toothing (12) of the belt spool by means of the control ring (22) up to the first contact between the locking tooth (13) of the locking catch (14) and the locking toothing (12).

4. The belt retractor according to Claim 3, **characterised in that** the guide groove (30) comes clear of the pin (28) after the first contact between the locking tooth (13) of the locking catch (14) and the locking toothing (12) of the belt spool.

5. The belt retractor according to Claim 4, **characterised in that** the guide groove (30) has at least partially a width which is greater than the diameter of the pin (28).

6. The belt retractor according to any one of Claims 2 to 5, **characterised in that** the pin (34) is arranged at the front end of the locking catch (14), which is remote from the rotation axis (D) of the locking catch (14).

7. The belt retractor according to any one of Claims 2 to 6, **characterised in that** the slot (32) is deformable or is mounted on the control ring (22) so as to be elastically displaceable.

8. The belt retractor according to any one of Claims 2 to 7, **characterised in that** the control ring (22) is rotatable concentrically to the rotation axis (C) of the belt spool and that a first section of the slot (32), which on a rotation of the control ring (22) engages the locking catch (14) into the locking toothing (12) up to the first contact with the latter, is aligned in the position of rest of the control ring (22) approximately parallel to a plane (w), which runs through the rotation axis (C) of the belt spool and the rotation axis (D) of the locking catch (14).

9. The belt retractor according to Claim 8, **characterised in that** the direction of extent (x) of the first section of the slot (32) and a plane (y) running through the pivot point (D) of the locking catch (14) and the pin (34) include an angle (α) between approximately 130° and approximately 150°.

10. The belt retractor according to Claim 9, **characterised in that** the angle (α), included by the direction of extent (x) of the first section and the plane (y) running through the pivot point (D) of the locking catch (14) and the pin (34), amounts to approximately 140°.

11. The belt retractor according to any one of Claims 8 to 10, **characterised in that** a second section of the slot (32), converting the swivelling movement following the engagement movement of the locking catch (14) into a rotation of the control ring (22), is curved, with respect to the direction in which the first section extends, towards the rotation axis (C) of the belt spool.

12. The belt retractor according to Claim 11, **characterised in that** the curvature of the second section rises, proceeding from the transition to the first section.

13. The belt retractor according to any one of Claims 11 and 12, **characterised in that** a tangent (z) to the end of the second section of the slot (32), facing away from the first section, includes an angle (β) between approximately 30° and approximately 60° with a plane (w) running through the rotation axis (C) of the belt spool and the rotation axis (D) of the locking catch (14).

14. The belt retractor according to Claim 13, **characterised in that** the angle (β), included by the tangent (z) to the end of the second section of the slot (32), facing away from the first section, with the plane (w) running through the rotation axis (C) of the belt spool and the rotation axis (D) of the locking catch (14), amounts to approximately 45°.

15. The belt retractor according to any one of the preceding claims, **characterised in that** the pin (34) is constructed in one piece with the locking catch (14).

16. The belt retractor according to any one of Claims 2 to 15, **characterised in that** the longitudinal direction of the slot (32) extends approximately in the direction of the belt webbing withdrawal from the belt spool.

## Revendications

1. Enrouleur de ceinture pour une ceinture de sécurité de véhicule, comportant un cadre (10) dans lequel est montée en rotation une bobine de ceinture qui est pourvue d'une denture de blocage (12), ainsi qu'un loquet de blocage (14) pourvu d'au moins une dent de blocage (13), lequel peut être amené jusque dans la denture de blocage (12) pour bloquer la bobine de ceinture à l'encontre d'une rotation dans le sens de déroulement de la ceinture de sécurité, une bague de commande (22) rotative par rapport à la bobine de ceinture, qui est pourvue d'une denture d'accouplement (24) et qui engage le loquet de blocage (14), un loquet d'accouplement (20) monté à rotation sur la bobine de ceinture et une came de commande (16) qui est solidaire en rotation avec la bobine de ceinture et sur laquelle est montée en rotation une came d'inertie qui, lors d'une rotation relative par rapport à la came de commande (16), amène le loquet d'accouplement (20) en engagement avec la denture d'accouplement (24) de la bague de commande (22), grâce à quoi, lorsque la bobine de ceinture tourne dans le sens de déroulement, la bague de commande (22) est entraînée par le loquet d'accouplement (20) et le loquet de blocage (14) est amené en engagement dans la denture de blocage (12) jusqu'à un premier contact entre la dent de blocage (13) et la denture de blocage (12) par une liaison entre la bague de commande (22) et le loquet de blocage (14), un couple de rotation étant exercé par la denture de blocage (12) sur le loquet de blocage (14) à partir de ce premier contact, de telle sorte que le loquet de blocage (14) pivote complètement dans la denture de blocage,
**caractérisé en ce que** le loquet de blocage (14) et la bague de commande (22) sont accouplés l'un à l'autre aussi au moyen d'un guide de coulisse (32, 34) qui, après le premier contact entre la dent de blocage (13) et la denture de blocage (12), transforme le mouvement de pivotement du loquet de blocage (14) jusque dans la denture de blocage (12) en une rotation de la bague de commande (22) qui devance la rotation de la bobine de ceinture dans le sens de déroulement.

2. Enrouleur de ceinture selon la revendication 1, **caractérisé en ce que** le guide de coulisse est constitué par une goupille (34) prévue sur le loquet de blocage (14) et une coulisse (32) prévue sur la bague de commande (22).

3. Enrouleur de ceinture selon l'une des revendications 1 et 2, **caractérisé en ce que** le loquet de blocage (14) est pourvu d'une gorge de guidage (30) dans laquelle s'engage un tourillon (28) prévu sur la bague de commande (22) de sorte que le loquet de blocage (14) peut être engagé dans la denture de blocage (12) de la bobine de ceinture au moyen de la bague de commande (22) jusqu'au premier contact entre la dent de blocage (13) du loquet de blocage (14) et la denture de blocage (12).

4. Enrouleur de ceinture selon la revendication 3, **caractérisé en ce que** la gorge de guidage (30) se libère du tourillon (27) après le premier contact entre la dent de blocage (13) du loquet de blocage (14) et la denture de blocage (12) de la bobine de ceinture.

5. Enrouleur de ceinture selon la revendication 4, **caractérisé en ce que** la gorge de guidage (30) a au moins partiellement une largeur qui est supérieure au diamètre du tourillon (28).

6. Enrouleur de ceinture selon l'une des revendications 2 à 5, **caractérisé en ce que** la goupille (34) est agencée sur l'extrémité antérieure du loquet de blocage (14) qui est éloignée de l'axe de rotation (D) du loquet de blocage (14).

7. Enrouleur de ceinture selon l'une des revendications 2 à 6, **caractérisé en ce que** la coulisse (32) est déformable ou est montée sur la bague de commande (22) de manière à se déplacer élastiquement.

8. Enrouleur de ceinture selon l'une des revendications 2 à 7, **caractérisé en ce que** la bague de commande (22) est rotative concentriquement à l'axe de rotation (C) de la bobine de ceinture et **en ce qu'**un premier tronçon de la coulisse (32) qui, lors d'une rotation de la bague de commande (22), engage le loquet de blocage (14) dans la denture de blocage (12) jusqu'au premier contact avec cette dernière, est orienté, dans la position de repos de la bague de commande (22), approximativement parallèlement à un plan (w) qui s'étend à travers l'axe de rotation (C) de la bobine de ceinture et à travers l'axe de rotation (D) du loquet de blocage (14).

9. Enrouleur de ceinture selon la revendication 8, **caractérisé en ce que** la direction d'extension (x) du premier tronçon de la coulisse (32) et un plan (y) s'étendant à travers le point de rotation (D) du loquet de blocage (14) et à travers la goupille (34) forment un angle (α) entre environ 130° et environ 150°.

10. Enrouleur de ceinture selon la revendication 9, **caractérisé en ce que** l'angle (α) que forment la direction d'extension (x) du premier tronçon de la coulisse (32) et le plan (y) s'étendant à travers le point de rotation (D) du loquet de blocage (14) et à travers la goupille (34), est d'environ 140°.

11. Enrouleur de ceinture selon l'une des revendications 8 à 10, **caractérisé en ce qu'**un deuxième tronçon, qui transforme en une rotation de la bague de commande (22) le mouvement de pivotement suivant le mouvement d'engagement du loquet de blocage (14), est incurvé vers l'axe de rotation (C) de la bobine de ceinture, par rapport à la direction dans laquelle s'étend le premier tronçon.

12. Enrouleur de ceinture selon la revendication 11, **caractérisé en ce que** la courbure du deuxième tronçon augmente depuis la transition vers le premier tronçon.

13. Enrouleur de ceinture selon l'une des revendications 11 et 12, **caractérisé en ce qu'**une tangente (z) à l'extrémité détournée du premier tronçon, du deuxième tronçon de la coulisse (32), forme avec un plan (w) s'étendant à travers l'axe de rotation (C) de la bobine de ceinture et à travers l'axe de rotation (D) du loquet de blocage (14), un angle (β) entre environ 30° et environ 60°.

14. Enrouleur de ceinture selon la revendication 13, **caractérisé en ce que** l'angle (β), que forme la tangente (z) à l'extrémité détournée du premier tronçon, du deuxième tronçon de la coulisse (32), avec un plan (w) s'étendant à travers l'axe de rotation (C) de la bobine de ceinture et à travers l'axe de rotation (D) du loquet de blocage (14), est d'environ 45°.

15. Enrouleur de ceinture selon l'une des revendications précédentes, **caractérisé en ce que** la goupille (34) est réalisée d'un seul tenant avec le loquet de blocage (14).

16. Enrouleur de ceinture selon l'une des revendications 2 à 15, **caractérisé en ce que** la direction longitudinale de la coulisse (32) s'étend approximativement dans la direction du retrait de la bande de ceinture depuis la bobine de ceinture.
